# EUROPEAN PATENT APPLICATION

(11) **EP 4 681 991 A1**
(43) Date of publication of application: **21.01.2026**
(21) Application number: 25188832.7
(22) Date of filing: 10.07.2025
(51) Int. Cl.: B60R 3/00, B60R 3/02, E02F 9/08

(54) **INDUSTRIAL VEHICLE**

(30) Priority: 15.07.2024 KR 20240093291
(71) Applicant: HD Hyundai Infracore Co., Ltd., Incheon 22502 (KR)
(72) Inventor: KIM, Mi Yeon, 22502 Incheon (KR)
(74) Representative: Isarpatent

(57) **Abstract**

An industrial vehicle is disclosed. In one embodiment of the present disclosure, a ladder unit is installed at a location adjacent to a battery unit, thereby improving convenience and workability.

## Description

### BACKGROUND OF THE INVENTION

### Field of the Invention

The present embodiment relates to an industrial vehicle with improved structure of a ladder provided on the industrial vehicle, such as a wheel loader.

### Description of the Related Art

A loader is a device for loading or transporting soil or aggregate on a dump vehicle at a construction site, and its types include wheel loaders and track loaders. The wheel loader uses large low-pressure tires and is capable of excavation work, and a front-wheel drive type is used mainly.

Conventional wheel loaders have excellent maneuverability and thus have a fast driving speed and excellent workability even on paved roads. That is, the wheel loader has a main power transmission device and an engine mounted on a rear frame, work devices such as a bucket, a boom, a hydraulic cylinder, etc. mounted on a front frame, and a tire installed on a lower portion thereof.

In addition, a fender is mounted on an upper portion of a tire, and among fenders mounted on the upper portion of the tire, a fender on a rear side of a vehicle body, that is, a rear fender, is installed on the front of the tire.

The wheel loader has a rear full fender installed behind the rear fender via a fixing unit, and the other front end of the rear full fender is rotatably installed on a battery box via a fixing pin.

In conventional wheel loaders, a ladder is installed near the rear fender so that a driver gets on or off the driver's seat. The rear fender is provided to cover an upper side of a wheel provided on the industrial vehicle, and is used for the driver getting on when moving from the ground to the driver's seat, or getting off when moving from the driver's seat to the ground.

Since conventional ladders are simply used for the driver getting on or off the driver's seat, improvements in space utilization and functionality are needed.

### Documents of Related Art

(Patent Document 1) Korean Laid-Open Patent No. 20-0153418 (May 7, 1999)

### SUMMARY OF THE INVENTION

Embodiments of the present disclosure are directed to providing an industrial vehicle having a ladder integrally coupled with a battery box.

According to one embodiment of the present disclosure, there is provided an industrial vehicle including a battery unit 100 provided on a lower side of a platform 2 of a wheel loader, and a ladder unit 200 installed on a front surface of the battery unit 100 and provided for a driver to get on or off a driver's seat provided on a wheel loader, wherein the ladder unit 200 is coupled to be rotatable outward from the front surface of the battery unit 100.

The battery unit 100 may include a case 110 formed to have a predetermined size, a plurality of batteries 120 stored in a lower inner portion of the case 110, and a front door 130 installed on a front surface of the case 110.

The case 110 may be provided with a switch panel 150 installed at a front inner location and having components for inspecting electrical components.

A tool storage box 111 having a predetermined size may be formed on an upper inner portion of the case 110 to store various tools.

The front door 130 may rotate outward from the case 110 via a hinge unit 132 provided on a side surface of the case 110.

The front door 130 may include a first reinforcing member 134 located on one side of inner edges, and a second reinforcing member 136 located on the other side spaced apart from the first reinforcing member 134.

The first reinforcing member 134 may be connected to the hinge unit 132.

A support member 138 connecting the first reinforcing member 134 to the second reinforcing member 136 may be installed on the front door 130.

The support member 138 may include a first support member 138a located horizontally on an upper rear inner side of the front door 130, and a second support member 138b located horizontally on a lower rear inner side of the front door 130.

The front door 130 may have a first inspection door 131, which opens and closes outward, installed on an upper front side thereof, and the ladder unit 200 may maintain a state of being connected to the front door 130 on a lower side of the first inspection door 131.

The ladder unit 200 may include a first ladder unit 210 installed on the front door 130, and a second ladder unit 220 located to be spaced a predetermined distance from a lower side of the first ladder unit 210 and connected to the first ladder unit 210 via a connecting member 300.

The first ladder unit 210 may include a side frame 212 installed at a predetermined distance via a coupling member 10 at a location of an outer surface of the front door 130, which faces the first reinforcing member 134, and steps 214 having both ends coupled between the side frames 212 and spaced a predetermined distance from each other.

The connecting member 300 has one end coupled to the side frame 212, has the other end connected to the second ladder unit 220, and use a material having an elastic restoring force.

### BRIEF DESCRIPTION OF THE DRAWINGS

FIGS. 1 and 2 are perspective views showing a battery unit and a ladder unit that are provided in an industrial vehicle according to the present embodiment.
FIG. 3 is a perspective view showing an opened state of the ladder unit according to the present embodiment.
FIG. 4 is a perspective view showing FIG. 3 at a different angle.

### DETAILED DESCRIPTION OF THE INVENTION

Advantages and features of the present disclosure and methods for achieving them will become clear with reference to embodiments to be described below in detail in conjunction with the accompanying drawings. However, the present disclosure is not limited to the embodiments disclosed below but can be implemented in various different forms, these embodiments are merely provided to make the disclosure of the present disclosure complete and fully inform those skilled in the art to which the present disclosure pertains of the scope of the present disclosure, and the present disclosure is only defined by the scope of the appended claims. The same reference number denotes the same components throughout the specification.

When one component is "connected to" or "coupled to" another component, it includes both a case in which the one component is directly connected or coupled to another component or a case in which still another component is interposed therebetween. On the other hand, when one component is "directly connected to" or "directly coupled to" another component, it means that still another component is not interposed therebetween. The term "and/or" includes each of stated items and any combination of one or more.

Terms used herein are intended to describe the embodiments and are not intended to limit the present disclosure. In the present specification, the singular form also includes the plural form unless specifically stated in the phrase. As used herein, "comprises" and/or "comprising" means that the stated component, step, operation, and/or element do not preclude the presence of addition of one or more other components, steps, operations, and/or elements.

Although first, second, and the like are used to describe various components, it goes without saying that these components are not limited by these terms. These terms are only used to distinguish one component from another component.

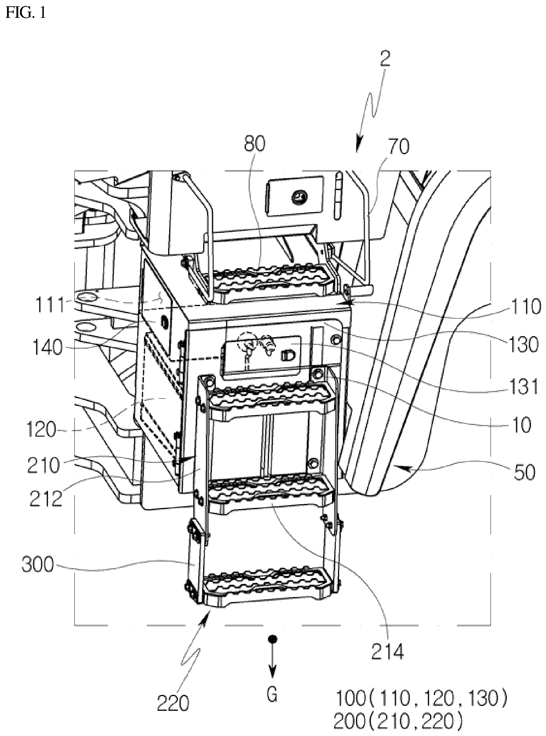

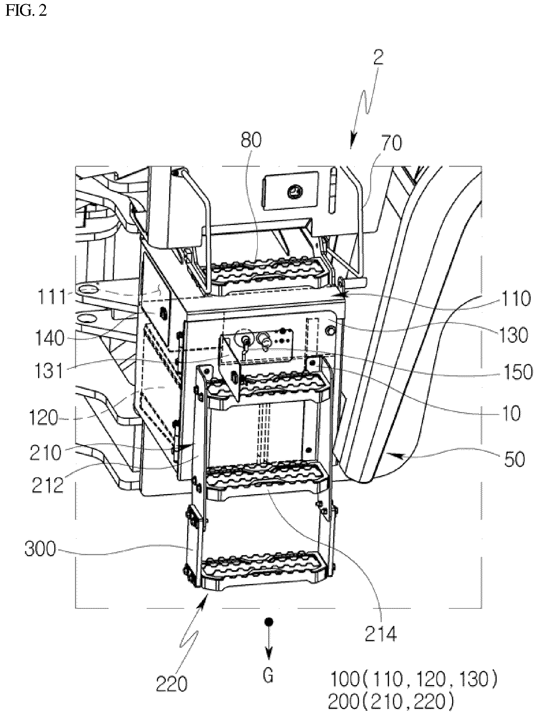

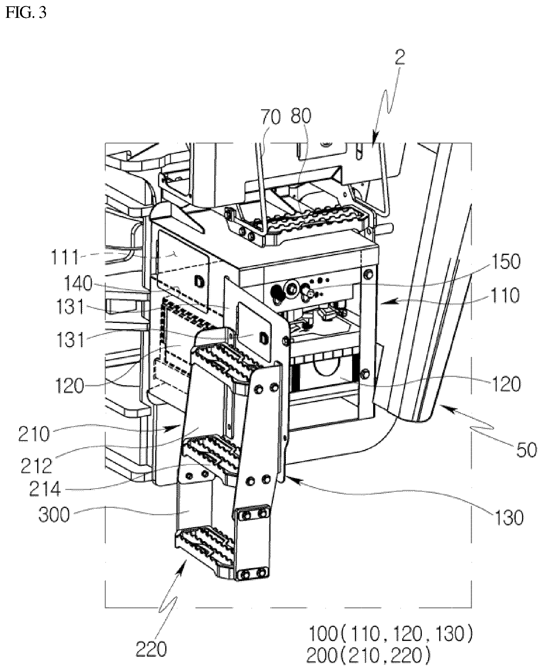

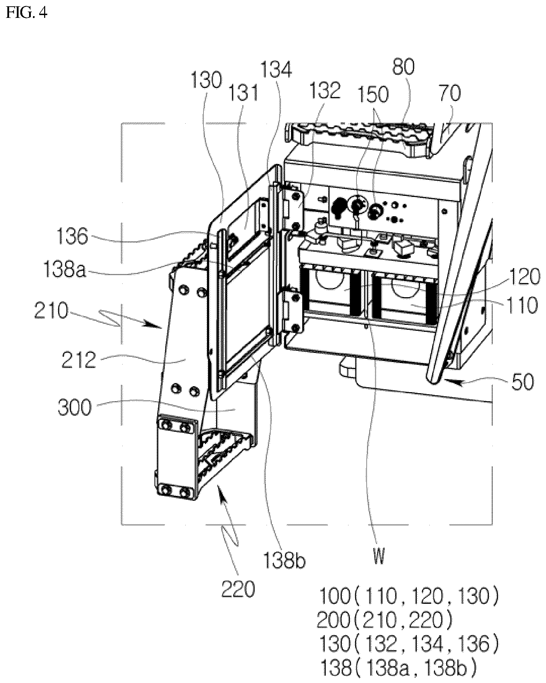

An industrial vehicle according to one embodiment of the present disclosure will be described with reference to the accompanying drawings. FIGS. 1 and 2 are perspective views showing a battery unit and a ladder unit that are provided in an industrial vehicle according to the present embodiment, FIG. 3 is a perspective view showing an opened state of the ladder unit according to the present embodiment, and FIG. 4 is a perspective view showing FIG. 3 at a different angle.

Referring to FIGS. 1 to 4, the industrial vehicle according to the present embodiment will be described based on a wheel loader as an example, but the wheel loader may be installed and used in other industrial vehicles and is not necessarily limited to the industrial vehicle shown in the drawings.

The industrial vehicle according to the present embodiment includes a battery unit 100 provided on a lower side of a platform 2 and a ladder unit 200 installed on a front surface of the battery unit 100 and provided for a driver to get on or off a driver's seat provided on the wheel loader, in which the ladder unit 200 is coupled to be rotatable from the front surface of the battery unit 100 to the outside.

In particular, according to the present embodiment, it is possible to improve the convenience of replacing a battery 120 by changing a location of the battery unit 100, minimize electrical loss by shortening lengths of a plurality of wire harnesses connected to the battery 120, and improve startability in a low-temperature working environment to achieve a rapid operation.

A rear fender 50 and a full fender are provided to cover an upper side of the wheel provided in the industrial vehicle, the platform 2 connected to the rear fender 50 is provided, and the battery unit 100 is installed in a space between a lower side of the platform 2 and the rear fender 50.

In addition, the platform 2 has a guide handle 70 provided on each of left and right sides thereof so that the driver moves to the upper side of the platform 2 through the ladder unit 200, and the driver's seat is not shown, but is located adjacent to the platform 2.

The guide handle 70 is provided with a guide step 80 that serves as a footrest, and the guide step 80 may be used when the driver gets on or off through the ladder unit 200, thereby improving convenience.

The battery unit 100 according to the present embodiment is provided with a case 110 formed to a predetermined size, a plurality of batteries 120 stored in a lower inner side of the case 110 are located to be withdrawn or inserted, and a front door 130 is provided on a front surface of the case 110.

As shown in FIGS. 3 and 4, the case 110 has the front door 130 installed on the front surface of the case 110 so as to be openable and closable to the outside, and the battery 120 is provided on the lower inner side of the case 110 so as to be withdrawn or inserted to the outside.

For example, two batteries 120 may be stored inside the case 110, and a partition wall W (see FIG. 4) is formed inside the case 110 so that the two batteries may be stored independently without interference.

An upper side of the battery 120 is provided with each of a positive electrode terminal and a negative electrode terminal, and a wire hamess connected to the positive electrode terminal and the negative electrode terminal is installed. The wire hamess is configured as a plurality of wire harnesses because it is installed on each of the positive electrode terminal and the negative electrode terminal.

In the present embodiment, since the battery 120 is installed at a location adjacent to the driver's seat, an extension length of the wire hamess is relatively shorter. As the length of the wire hamess increases, the probability of occurrence of disadvantages due to power loss and increased resistance increases, and a layout also becomes complicated, and thus its extension is preferably minimized.

In the present embodiment, to this end, the battery 120 may be located at a location as close to the driver's seat as possible, thereby minimizing unnecessary extension of the wire harness.

In addition, in the present embodiment, stable start can be possible even when outside temperature drops below zero, such as in winter, due to a reduction in length of the wire harness, and engine start failure under cold start conditions can be prevented.

Accordingly, even when the industrial vehicle is operated in cold winter or polar regions, stable operation and start stability can be improved.

The case 110 has a tool storage box 111 with a predetermined size formed on an upper inner side thereof so that various tools may be stored together with a space in which the battery 120 is stored.

The tool storage box 111 has a predetermined size for the purpose of storing mainly used tools or other tools required by the driver.

The tool storage box 111 is located above the battery 120, but has a side door 140 provided so as to be openable or closable from a side surface without opening the front door 130.

Since the side door 140 does not overlap the front door 130 due to the opening and closing operation even when the driver or an operator opens the front door 130, in order to withdraw the tool from the inside to the outside of the case 110, the tool can be conveniently withdrawn without opening the front door 130, thereby improving convenience.

The front door 130 is opened outward together with the ladder unit 100 when the battery 120 needs to be replaced or other maintenance is required.

The case 110 is provided with a switch panel 150 installed at a front inner location and having components for inspecting electrical components. The switch panel 150 is disposed in a direction facing the front surface of the case 130 as shown in the drawing so as to facilitate manipulation when the driver or the operator opens the front door 130.

Referring to FIG. 4, the front door 130 rotates outward from the case 110 together with the ladder unit 100 via a hinge unit 132 provided on the side surface of the case 110.

Since the front door 130 rotates together with the ladder unit 100 on the front surface of the case 110, the front door 130 opens only when the ladder unit 100 is not in use, and when the front door 130 is in a closed state, the front door 130 comes into close contact with the case 110 to maintain the closed state.

The ladder unit 100 is normally used in the closed state, but when replacement or inspection of the battery 120 is required, the ladder unit 100 may rotate outward from the case 110 together with the front door 130, and thus an operator can easily perform the necessary replacement or inspection on site.

The front door 130 according to the present embodiment includes a first reinforcing member 134 located on one side of an inner edge, and a second reinforcing member 136 located on the other side spaced from the first reinforcing member 134.

The first and second reinforcing members 134 and 136 are installed as shown in the drawing in order to prevent the front door 130 from being deformed by a load according to a weight of the ladder unit 200.

When the ladder unit 200 is installed, the front door 130 experiences a sagging load in a direction of gravity G toward the ground. In the present embodiment, the first and second reinforcing members 134 and 136 are installed to prevent the sagging load in the direction of gravity in the front door 130.

The first and second reinforcing members 134 and 136 are installed vertically on the left and right sides of the front door 130, respectively, with respect to the inside of the ladder unit 200.

The reason why the first and second reinforcing members 134 and 136 are installed vertically is to match a load support point with locations at which the first and second reinforcing members 134 and 136 are installed when the ladder unit 200 is installed on the front door 130.

In this case, the load may be distributed to the left and right sides of the front door 130 in a width direction, thereby preventing deformation of the ladder unit 100 or the front door 130 due to the weight of the operator or the driver.

The first reinforcing member 134 may be changed to a polygonal shape or other shape as shown in the drawing and is not particularly limited to a specific shape.

Since the first reinforcing member 134 may be installed to be connected to the hinge unit 132, the first reinforcing member 134 may receive a portion of the load applied to the hinge unit 132 and support and distribute the portion to the front door 130, thereby stably spreading the load concentrated on the hinge unit 132 or the first reinforcing member 134. In this case, the deformation of the front door 130 due to the load is prevented, and the durability of the hinge unit 132 is also improved.

The second reinforcing member 136 is formed of a plate bent into an L shape, but may be changed into various other forms.

A support member 138 connecting the first reinforcing member 134 to the second reinforcing member 136 is installed on the front door 130.

The support member 138 includes a first support member 138a located horizontally on an upper rear inner side of the front door 130, and a second support member 138b located horizontally on a lower rear inner side of the front door 130.

The support member 138 is provided to prevent horizontal deformation of the front door 130 together with the first and second reinforcing members 134 and 136.

The support member 138 may reinforce a lateral torsional stress of the front door 130, thereby preventing bending even when a momentary load is applied to the ladder unit 200.

Installation locations and shapes of the first support member 138a and the second support member 138b may be changed in various ways and are not limited to the shapes shown in the drawing.

The front door 130 has a first inspection door 131, which opens and closes outward, installed on an upper front side thereof, and the ladder unit 200 maintains a state of being connected to the front door 130 on a lower side of the first inspection door 131.

The first inspection door 131 is a door used when routine inspection is required and is provided so that, when inspection or use of the switch panel 150 is required, the switch panel 150 may be manipulated by opening only the first inspection door 131 without opening the front door 130.

When the first inspection door 131 is provided, the operator or the driver can conveniently inspect or operate the switch panel 150 on site, thereby improving convenience.

The ladder unit 200 according to the present embodiment includes a first ladder unit 210 installed on the front door 130, and a second ladder unit 220 located to be spaced a predetermined distance from a lower side of the first ladder unit 210 and connected to the first ladder unit 210 via a connecting member 300.

The first ladder unit 210 includes a side frame 212 installed at a predetermined distance via a coupling member 10 at a location of an outer surface of the front door 130, which faces the first reinforcing member 134, and steps 214 having both ends coupled between the side frames 212 and spaced a predetermined distance from each other.

The side frame 212 is formed of a plate bent into an L shape, but may be changed into another shape. The side frame 212 is configured so that a cross-sectional area increases from an upper side to a lower side for rigidity reinforcement, and the step 214 has a protrusion formed on an upper surface to prevent slipping.

Since the step 214 is coupled to the first reinforcing member 134 with a bolt, the stably fixed state is maintained without shaking.

The second ladder unit 220 has a step that is movable by an operator or a driver together with the first ladder unit 210 and a protrusion formed on an upper surface to prevent slipping.

Since the connecting member 300 has one end coupled to the side frame 212, has the other end coupled to the second ladder unit 220, and uses a material having an elastic restoring force, an impact applied to the connecting member 300 and the first ladder unit 220 can be reduced.

Accordingly, in the present embodiment, even when a strong load is momentarily applied to the second ladder unit 220, the second ladder unit 220 temporarily moves in the direction of gravity G and then returns to the original location, thereby minimizing deformation caused by the applied load.

According to the present embodiments, it is possible to improve the convenience of replacement by changing the location of the battery unit provided in the industrial vehicle to near the ladder unit adjacent to the platform and changing the structure so that the ladder unit can be opened and closed from the front of the battery unit.

According to the present embodiments, it is possible to minimize electrical loss by shortening the length of the wire hamess withdrawn from the battery unit.

According to the embodiments of the present disclosure, it is possible to shorten the length of the wire hamess connected to the battery unit, thereby improving the startability in the low-temperature working environment.

According to the embodiments of the present disclosure, it is possible to improve the convenience of use because the battery unit can be stored and withdrawn in the location adjacent to the ladder unit.

Although one embodiment of the present disclosure has been described above, those skilled in the art may variously modify and change the present disclosure by the addition, change, deletion, or addition of components without departing from the spirit of the present disclosure described in the appended claims, which will also be included in the scope of the present disclosure.

### DESCRIPTION OF REFERENCE NUMERALS

2: platform
100: battery unit
110: case
120: battery
130: front door
200: ladder unit
210: first ladder unit
212: side frame
214: step
220: second ladder unit

## Claims

1. An industrial vehicle comprising:
a battery unit (100) provided on a lower side of a platform (2) of a wheel loader; and
a ladder unit (200) installed on a front surface of the battery unit (100) and provided for a driver to get on or off a driver's seat provided on a wheel loader,
wherein the ladder unit (200) is coupled to be rotatable outward from the front surface of the battery unit (100).

2. The industrial vehicle of claim 1, wherein the battery unit (100) includes:
a case (110) formed to have a predetermined size;
a plurality of batteries (120) stored in a lower inner portion of the case (110); and
a front door (130) installed on a front surface of the case (110).

3. The industrial vehicle of claim 2, wherein the case (110) is provided with a switch panel (150) installed at a front inner location and having components for inspecting electrical components.

4. The industrial vehicle of claim 3, wherein a tool storage box (111) having a predetermined size is formed on an upper inner portion of the case (110) to store various tools.

5. The industrial vehicle of claim 2, wherein the front door (130) rotates outward from the case (110) via a hinge unit (132) provided on a side surface of the case (110).

6. The industrial vehicle of claim 5, wherein the front door (130) includes: a first reinforcing member (134) located on one side of inner edges; and
a second reinforcing member (136) located on the other side spaced apart from the first reinforcing member (134).

7. The industrial vehicle of claim 6, wherein the first reinforcing member (134) is connected to the hinge unit (132).

8. The industrial vehicle of claim 6, wherein a support member (138) connecting the first reinforcing member (134) to the second reinforcing member (136) is installed on the front door (130).

9. The industrial vehicle of claim 8, wherein the support member (138) includes:
a first support member (138a) located horizontally on an upper inner side of a rear surface of the front door (130); and
a second support member (138b) located horizontally on a lower inner side of the rear surface of the front door (130).

10. The industrial vehicle of claim 9, wherein the front door (130) has a first inspection door (131), which opens and closes outward, installed on an upper front side thereof, and the ladder unit (200) maintains a state of being connected to the front door (130) on a lower side of the first inspection door (131).

11. The industrial vehicle of claim 10, wherein the ladder unit (200) includes:
a first ladder unit (210) installed on the front door (130); and
a second ladder unit (220) located to be spaced a predetermined distance from the lower side of the first ladder unit (210) and connected to the first ladder unit (210) via a connecting member (300).

12. The industrial vehicle of claim 11, wherein the first ladder unit (210) includes:
a side frame (212) installed at a predetermined distance via a coupling member (10) at a location of the outer surface of the front door (130), which faces the first reinforcing member (134); and
steps (214) each having two ends coupled between the side frames (212) and spaced a predetermined height from each other.

13. The industrial vehicle of claim 12, wherein the connecting member (300) has one end coupled to the side frame (212), has the other end connected to the second ladder unit (220), and use a material having an elastic restoring force.
